# EUROPEAN PATENT APPLICATION

(11) **EP 4 841 703 A1**
(43) Date of publication of application: **18.11.2026**
(21) Application number: 26178720.4
(22) Date of filing: 13.05.2026
(51) Int. Cl.: H01M 4/36, H01M 4/58, H01M 4/505, H01M 10/0525, H01M 4/02

(54) **METHODS FOR PREPARING COMPOSITE POSITIVE ELECTRODE ACTIVE MATERIALS, COMPOSITE POSITIVE ELECTRODE ACTIVE MATERIALS, AND RECHARGEABLE LITHIUM BATTERIES**

(30) Priority: 14.05.2025 KR 20250062705; 11.05.2026 KR 20260084890
(71) Applicant: SAMSUNG SDI CO., LTD., Yongin-si, Gyeonggi-do 17084 (KR)
(72) Inventor: Kim, Young-Ki, 17084 Yongin-si (KR); Kim, Sangmi, 17084 Yongin-si (KR); Doo, Sungwook, 17084 Yongin-si (KR); Kang, Gwiwoon, 17084 Yongin-si (KR); Kang, Minchul, 17084 Yongin-si (KR); Lee, Soonrewl, 17084 Yongin-si (KR)
(74) Representative: Maiwald GmbH

(57) **Abstract**

Disclosed are a method for preparing a composite positive electrode active material, a composite positive electrode active material, and a rechargeable lithium battery. The method for preparing a composite positive electrode active material includes: preparing a first positive electrode active material including a lithium iron phosphate-based compound and in a form of primary particles; mixing and wet milling the first positive electrode active material and a second positive electrode active material including a lithium manganese-based composite oxide and in a form of secondary particles in which a plurality of primary particles are agglomerated to prepare a first slurry; and adding the first slurry to a spray dryer and spray drying the first slurry to prepare a first dried product.

## Description

### FIELD

Methods for preparing composite positive electrode active materials, composite positive electrode active materials, and rechargeable lithium batteries are disclosed.

### BACKGROUND

A portable information device such as a cell phone, a laptop, smart phone, and the like or an electric vehicle has used a rechargeable lithium battery having high energy density as a driving power source. Recently, research has been actively conducted to use a rechargeable lithium battery with high energy density as a driving power source for hybrid or electric vehicles or power storage power source.

In addition, there is an increasing demand for new positive electrode active materials that are high-performance, safe, and reliable for the enlargement and mass production of rechargeable lithium batteries. For example, a lithium iron phosphate-based positive electrode active material is attracting attention because it is structurally stable, has high heat resistance, and is abundant in a raw material, making them cost-effective.

However, the lithium iron phosphate-based positive electrode active material has a phenomenon in which cycle-life characteristics deteriorate at high voltage, and thus there is a limit to the voltage of use. It also has the disadvantage of low capacity and energy density.

### SUMMARY

Some example embodiments provide a method for preparing a composite positive electrode active material which includes: preparing a first positive electrode active material including a lithium iron phosphate-based compound and in a form of primary particles; mixing and wet milling the first positive electrode active material and a second positive electrode active material including a lithium manganese-based composite oxide and in a form of primary particles to prepare a first slurry; and adding the first slurry to a spray dryer and spray drying the first slurry to prepare a first dried product.

Some example embodiments provide a composite positive electrode active material which includes: a first positive electrode active material including a lithium iron phosphate-based compound and in a form of primary particles; and a second positive electrode active material including a lithium manganese-based composite oxide and in a form of secondary particles in which a plurality of primary particles are agglomerated, wherein the composite positive electrode active material has a particle form including a plurality of primary particles of the first positive electrode active material and a plurality of primary particles of the second positive electrode active material.

Some example embodiments provide a rechargeable lithium battery including a positive electrode including a positive electrode current collector, and a positive electrode active material layer disposed on the positive electrode current collector and including the composite positive electrode active material prepared by the aforementioned preparing method; a negative electrode; and an electrolyte.

### BRIEF DESCRIPTION OF THE DRAWINGS

FIG. 1 is a schematic perspective view showing a portion of a cylindrical rechargeable lithium battery cut away.
FIG. 2 is a cross-sectional view schematically showing a prismatic rechargeable lithium battery.
FIGS. 3 and 4 are schematic exploded perspective views of pouch-type rechargeable lithium batteries.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" refers to a mixture, a laminate, a composite, a copolymer, an alloy, a blend, a reaction product, and the like of the constituents.

As used herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter (D₅₀) may mean a diameter of particles having a cumulative volume of 50 vol% in the particle size distribution, wherein the particles are assumed to be spherical. As used herein, when a definition is not otherwise provided, the average particle diameter refers to a value obtained by measuring the sizes of 20 randomly selected particles from a scanning electron microscope (SEM) image and calculating an arithmetic mean of the sizes of 20 randomly selected particles, wherein the size of each particle is defined as a diameter in the case of a spherical particle, and as a square root of a product of a major axis length and a minor axis length in the case of a non-spherical particle.

Herein, "or" is not to be construed as an exclusive meaning, for example, "A or B" is construed to include A, B, A+B, and the like.

"Metal" is interpreted as a concept including ordinary metals, transition metals and metalloids (semi-metals). As used herein, the term "metalloid" refers to an element having properties intermediate between those of metals and non-metals. Examples of the metalloid include, but are not limited to, boron (B), silicon (Si), germanium (Ge), arsenic (As), antimony (Sb), and tellurium (Te).

As used herein, the term "vacuum" refers to a pressure in the range of 0.1 mbar to 10 mbar, as measured in the treatment chamber using a vacuum gauge.

As used herein, the term "primary particle" refers to a minimum unit particle that is recognized as a single particle agglomerate when a positive electrode active material is observed using a scanning electron microscope (SEM), in which a grain boundary is not clearly distinguishable or is not substantially observed. A primary particle is a basic unit constituting a secondary particle formed by aggregation of tens to hundreds of particles, and may exist alone or in a state in which a small number (for example, 20 or less) of primary particles are in contact with each other.

As used herein, the term "secondary particle" refers to an agglomerate of primary particles of a given material, and may also be referred to as an assembly in the present disclosure. A secondary particle has a structure in which the primary particles are combined into a single particle form through interparticle contact and bonding, rather than being simply physically mixed. A secondary particle may be recognized as a single particle form in which a plurality of primary particles are aggregated when observed using a scanning electron microscope (SEM). Such a secondary particle is distinguished from a simple mixture in which respective particles are independently dispersed. A secondary particle may be formed by a spray-drying process, or the like.

The present disclosure provides a method for preparing a composite positive electrode active material, a composite positive electrode active material, and a rechargeable lithium battery, which improve charge/discharge efficiency, low-temperature discharge capacity, cycle-life characteristics, and high-temperature storage characteristics while securing price competitiveness and increasing average voltage, and which improves powder characteristics and thus pellet density.

### Method for Preparing Composite Positive Electrode Active Material

A method for preparing a composite positive electrode active material according to some example embodiments includes: preparing a first positive electrode active material including a lithium iron phosphate-based compound and in a form of primary particles; mixing and wet milling the first positive electrode active material and the second positive electrode active material including a lithium manganese-based composite oxide and in a form of secondary particles in which a plurality of primary particles are agglomerated to prepare a first slurry; and adding the first slurry to a spray dryer and spray drying the same to prepare a first dried product.

The lithium iron phosphate-based compound that has excellent structural stability, high heat resistance, and price competitiveness is attracting attention. However, although the lithium iron phosphate-based compound has excellent cycle-life characteristics, their cycle-life characteristics deteriorate when used at high voltages, and thus their usable voltage is limited.

Accordingly, there is an attempt to simply mix and use lithium manganese-based oxide, which is a low-cost material with a high average voltage. In this case, although the average voltage is improved, the initial charge/discharge efficiency, discharge capacity at low temperatures (e.g., -20 °C), cycle-life characteristics, and high-temperature storage characteristics may be deteriorated.

In some example embodiments, a first positive electrode active material including a low-cost lithium iron phosphate-based compound is included to secure price competitiveness, and a relatively low-cost lithium manganese-based oxide which may be used at a higher voltage than the lithium iron phosphate-based compound may be also included. However, by wet milling these to prepare a first slurry and spray drying this to prepare a dried product, a composite positive electrode active material may be provided in which the primary particles of the lithium iron phosphate-based compound and primary particles of the lithium manganese-based oxide are agglomerated to form a single secondary particle form, i.e., a type of assembly form.

In this case, the composite positive electrode active material comprising the lithium iron phosphate-based compound and the lithium manganese-based oxide have all the advantages of a simple mixture of these compounds, while at the same time solving the problems that arise from a simple mixture of these compounds. More specifically, in the case of the composite positive electrode active material prepared according to the method for preparing the composite positive electrode active material according to some example embodiments, the primary particles of the lithium iron phosphate-based compound and the primary particles of the lithium manganese-based oxide are agglomerated into a single secondary particle form, i.e., an assembly form, thereby securing price competitiveness, increasing the average voltage, and improving charge/discharge efficiency, low-temperature discharge capacity, cycle-life characteristics, and high-temperature storage characteristics, and improving the powder characteristics so that the pellet density may be improved.

Hereinafter, a method for preparing a composite positive electrode active material according to some example embodiments is described. In the preparing method herein, terms expressed using "first" and "second" in addition to the first positive electrode active material and the second positive electrode active material are expressed to identify the process of preparing a composite positive electrode active material using the first positive electrode active material and the second positive electrode active material and the process of preparing the first positive electrode active material, respectively. For example, in order to identify terms such as slurry commonly used in the process of preparing a composite positive electrode active material using the first positive electrode active material and the second positive electrode active material and in the process of preparing the first positive electrode active material, the slurry in the process of preparing the composite positive electrode active material using the first positive electrode active material and the second positive electrode active material may be indicated as "first slurry," and the slurry in the process of preparing the first positive electrode active material may be indicated as "second slurry."

For convenience, in the order described in the claims, the process of preparing a composite positive electrode active material using the first positive electrode active material and the second positive electrode active material is expressed as "first", and the process of preparing the first positive electrode active material is expressed as "second." However, it should be understood that "first" and "second" do not indicate the order between them.

### Preparing First Positive Electrode Active Material

The above step is a process for preparing a first positive electrode active material including a lithium iron phosphate-based compound and in a form of primary particles. The first positive electrode active material including the lithium iron phosphate-based compound and in the form of primary particles may be prepared according to the method described herein, or a commercially available product may be obtained and used.

The preparing of the first positive electrode active material including the lithium iron phosphate-based compound and in the form of primary particles may include wet milling an iron phosphate-based precursor, a lithium raw material, and a carbon raw material mixed in a second solvent to prepare a second slurry; adding the wet-milled second slurry to a spray dryer and spray-drying the wet-milled second slurry to prepare a second dried product; firing the second dried product to prepare a second fired product; and the pulverizing of the second fired product. Hereinafter, the steps for preparing the first positive electrode active material are sequentially described.

First, the second slurry may be prepared by mixing an iron phosphate-based precursor, a lithium raw material, and a carbon raw material in a second solvent and wet milling the mixture. The preparing of the second slurry may include mixing an iron phosphate-based precursor and a lithium raw material to prepare a raw material mixture, preparing a carbon raw material, and mixing the raw material mixture and the carbon raw material, adding a second solvent, and performing wet milling to prepare a second slurry. A mixing weight ratio of the raw material mixture and the carbon raw material is not specifically limited, but may be, for example, about 5:5 to about 99:1, about 6:4 to about 99:1, about 7:3 to about 99:1, about 8:2 to about 99:1, or about 9:1 to about 99:1.

The iron phosphate-based precursor may be an iron phosphate precursor such as iron phosphate (FePO₄) and iron(II) phosphate (Fe₃(PO₄)₂), or may be formed by adding a phosphorus raw material such as phosphoric acid (H₃PO₄), ammonium dihydrogen phosphate (NH₄H₂PO₄), diammonium hydrogen phosphate ((NH₄)₂HPO₄), or sodium orthophosphate (Na₃PO₄) to an iron raw material such as iron trioxide (Fe₂O₃), iron oxalate (FeC₂O₄), or iron hydroxide (Fe(OH)₃). In addition, the iron phosphate-based precursor may be a manganese iron phosphate precursor formed by adding a manganese raw material such as manganese oxide, manganese carbonate, manganese sulfate, or manganese nitrate to the iron phosphate precursor. The iron phosphate-based precursor may be used without limitation as long as it is a known material used in solid-phase reaction.

The lithium raw material may be, for example, Li₂CO₃, LiOH, a hydrate thereof, or a combination thereof.

The carbon raw material may include glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination thereof. For example, as the carbon raw materials, a mixture of glucose and polyethylene glycol may be used, and a mixing ratio by weight is not specifically limited, but may be, for example, about 10:90 to about 90:10, about 20:80 to about 80:20, about 30:70 to about 70:30, about 40:60 to about 60:40, or about 50:50.

The wet milling may be performed by adding a second solvent, and the second solvent may be any one of ethylene glycol (EG), diethylene glycol (DEG), triethylene glycol (TEG), tetraethylene glycol (TetraEG), propylene glycol (PG), polyethylene glycol (PEG), polypropylene glycol (PPG), ethanol, water, and acetone.

The wet milling may be performed using bead mill, ball mill, vibration mill, or colloid mill equipment. For example, in some embodiments, the wet milling may be performed using a ball milling method with zirconia balls, wherein the wet milling may be conducted by rotating a milling container at a rotational speed of from about 50 rpm to about 2000 rpm for about 1 hour to about 10 hours.

In the preparing of the second slurry by wet milling, a raw material including Al, Ca, Ce, Cr, Cu, La, Mg, Mn, Mo, Nb, Ni, Sn, Sr, Ti, V, W, Y, Zn, Zr, or a combination thereof may be further added to the slurry. For example, a raw material including Al, Mg, Mn, Ti, V, or a combination thereof may be added. For example, the raw material including Al, Mg, Ti, V, or the combination thereof may be further added as a type of doping element, and the Al, Mg, Ti, V, or the combination thereof may be added in an amount of about 0.1 mol% to about 0.5 mol%, from about 0.2 mol% to about 0.5 mol%, from about 0.3 mol% to about 0.5 mol%, or about 0.4 mol%, based on a total metal excluding lithium in the lithium iron phosphate-based compound of the first positive electrode active material. For example, a raw material containing Ti may be further added to the second slurry, and the Ti content may be added so as to be about 0.1 mol% to about 0.5 mol%, from about 0.2 mol% to about 0.5 mol%, from about 0.3 mol% to about 0.5 mol%, or about 0.4 mol%, based on a total metal excluding lithium in the first positive electrode active material. In this case, the rate characteristics and cycle-life characteristics may be improved.

Next, the wet-milled second slurry may be added to a spray dryer and spray-dried to produce a second dried product.

The wet-milled second slurry may be injected into a spray dryer and sprayed to generate droplets containing a desired uniform composition, and then the formed droplets may be dried to produce a second dried product.

The spray dryer may include an ultrasonic spray device, one- and two-fluid air nozzle spray device, an ultrasonic nozzle spray device, a filter expansion droplet generator (FEAG), and a disk-type droplet generator, and any known spray dryer may be used without limitation.

An amount of the second slurry added may vary depending on the spray dryer, but may be appropriately adjusted. For example, in one example, at a blower speed of about 50 Hz and an addition pressure of about 0.5 MPa, an addition speed of the second slurry may be less than or equal to about 1 kg/min, for example, less than about 1 kg/min, less than or equal to about 0.9 kg/min, less than or equal to about 0.8 kg/min, less than or equal to about 0.7 kg/min, less than or equal to about 0.6 kg/min, or less than or equal to about 0.5 kg/min, and greater than or equal to about 0.01 kg/min, greater than or equal to about 0.05 kg/min, greater than or equal to about 0.1 kg/min, greater than or equal to about 0.15 kg/min, greater than or equal to about 0.2 kg/min, greater than or equal to about 0.3 kg/min, or greater than or equal to about 0.4 kg/min. The addition speed of the slurry is a value converted on a solid content basis, and is defined as an amount of the slurry supplied per minute (min) based on a mass of solid content in the slurry. When the addition speed of the second slurry added to the spray dryer satisfies the above range, secondary particles composed of primary particles of uniform size may be produced, and the average size of the primary particles may be adjusted to less than or equal to about 200 nm, and the size of the secondary particles may also be uniformly controlled.

The spray drying may be performed at a temperature of greater than or equal to about 100 °C, for example, at a temperature of about 150 °C to about 400 °C, about 150 °C to about 300 °C, about 200 °C to about 300 °C, or about 200 °C to about 250 °C for drying the components and evaporating the solvent.

Next, the second dried product may be fired to produce a second fired product.

In the preparing of the second fired product, the firing may be performed under vacuum or inert gas and at a temperature of about 700 °C to about 1000 °C, for example, about 725 °C to about 900 °C, or about 750 °C to about 800 °C. The inert gas may be argon, nitrogen, and the like.

The second fired product may include a lithium iron phosphate-based compound and may be in the form of secondary particles in which a plurality of primary particles are agglomerated. The secondary particles may also be expressed as an assembly. More specifically, the secondary particles of the second fired product may have a spherical or ellipsoidal shape as the primary particles are closely agglomerated with each other. An average particle diameter of the secondary particles may be, for example, about 3 µm to about 20 µm, about 5 µm to about 18 µm, or about 7 µm to about 15 µm. The average particle diameter of the secondary particles may be, for example, obtained by randomly selecting about 20 secondary particles from an electron microscope image of the second fired product, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

The secondary particles of the second fired product may include pores therein, and the porosity may be about 10% to about 50%, for example, about 10% to about 40%, or about 10% to about 30%. The porosity may be, for example, the ratio of the area occupied by the pores within the secondary particles to the cross-sectional area of the secondary particles of the second fired product measured using an image analysis program such as Image J in a scanning electron microscope image of the cross-section of the secondary particles of the second fired product. A cross-section of the secondary particles may be obtained by cutting the second fired product using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the second fired products may be an average value of porosities measured with respect to a plurality of the second fired products, and may be, for example, obtained by measuring the porosity of at least 20 individual second fired products and calculating an average value of the porosity at least 20 individual second fired products.

The second fired product may further include a carbon coating layer on the surfaces of the secondary particles, the surfaces of the primary particles constituting the secondary particles, or the surfaces of both. If the second fired product is later pulverized to prepare the first positive electrode active material of primary particles, the carbon coating layer may improve the electrical conductivity of the first positive electrode active material and may lower the resistance of the positive electrode. The carbon coating layer may be formed by a firing process of the herein-mentioned carbon raw materials.

Next, the second fired product may be pulverized.

The pulverizing may be performed in equipment such as a jet mill, ball mill, bead mill, sand mill, etc., and known devices may be used without limitation.

The pulverization speed during the above pulverizing is not specifically limited as long as the second fired product in the form of an assembly is separated into primary particles constituting the assembly, but for example, the pulverizing may be performed at a pulverization speed exceeding about 2000 rpm, and for example, may be performed at a pulverization speed of about 3000 rpm to about 6000 rpm, or about 4000 rpm to about 6000 rpm. The pulverization of the above second fired product may be performed under conditions where the secondary particles may be pulverized and separated into a plurality of primary particles. If the pulverization speed is less than 2000 rpm, the secondary particles may not be pulverized and may exist in the form of an assembly. If the pulverization speed is greater than about 6000 rpm, the pulverized and separated primary particles may be damaged.

Through the pulverization process of the second fired product, the first positive electrode active material including the lithium iron phosphate-based compound and in the form of primary particles may be prepared. In the above step, the first positive electrode active material prepared according to the aforementioned method may be used.

The first positive electrode active material includes the lithium iron phosphate-based compound.

The lithium iron phosphate-based compound may include, for example a compound represented by Chemical Formula 1, a compound represented by Chemical Formula 2, or a combination thereof.

[Chemical Formula 1] Liₐ₁Fe₍₁₋ₓ₁₎M¹ₓ₁PO4

In Chemical Formula 1, 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof. Herein, 0.90≤a1≤1.5, for example, 0.90≤a1≤1.2, or 0.95≤a1≤1.1. Additionally, 0≤x1≤0.4, 0≤x1≤0.3, 0≤x1≤0.2, 0≤x1≤0.1, or 0≤x1≤0.05.

[Chemical Formula 2] Lia₂Mnx₂Fe_{(1-x2-y2)}M²_{y2}PO₄

In Chemical Formula 2, 0.9≤a2≤1.5, 0.1≤x2≤0.9, 0≤y2<0.9, x2+y2<1, and M² is Al, Ca, Ce, Cr, Cu, La, Mg, Mo, Nb, Ni, Sn, Sr, Ti, V, W, Y, Zn, Zr, or a combination thereof. Herein, 0.90≤a2≤1.5, for example 0.90≤a2≤1.2, or 0.95≤a2≤ 1.1. In addition, 0.1≤x2≤0.9, 0.3≤x2≤0.9, or 0.4≤x2≤0.8 and 0≤y2≤0.4, 0≤y2≤0.3, 0≤y2≤0.2, 0≤y2≤0.1, or 0≤y2≤0.05.

For example, the lithium iron phosphate-based compound may include LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof.

The lithium iron phosphate-based compound may include Al, Mg, Ti, V, or a combination thereof as a type of doping element, and the Al, Mg, Ti, V, or the combination thereof may be included in an amount of about 0.1 mol% to about 0.5 mol%, from about 0.2 mol% to about 0.5 mol%, from about 0.3 mol% to about 0.5 mol%, or about 0.4 mol%, based on a total metal excluding lithium, in which case the rate characteristics and cycle-life characteristics may be improved.

For example, the lithium iron phosphate-based compound may include Ti, Al, or a combination thereof as a doping element, and a Ti content may be about 0.1 mol% to about 0.5 mol%, from about 0.2 mol% to about 0.5 mol%, from about 0.3 mol% to about 0.5 mol%, or about 0.4 mol%, based on a total metal excluding lithium, and an Al content may be about 0.1 mol% to about 0.5 mol% based on a total metal excluding lithium. In this case, the rate characteristics and cycle-life characteristics may be improved.

For example, M¹ of Chemical Formula 1 and M² of Chemical Formula 2 may include Al, Mg, Ti, V, or a combination thereof, in which case cycle-life characteristics of the lithium iron phosphate-based positive electrode active material may be improved. In Chemical Formulas 1 and 2, Al, Mg, Ti, V, or a combination thereof may be included in an amount of about 0.1 mol% to about 0.5 mol%, from about 0.2 mol% to about 0.5 mol%, from about 0.3 mol% to about 0.5 mol%, or about 0.4 mol%, based on a total metal excluding lithium, and in this case, cycle-life characteristics of the lithium iron phosphate-based positive electrode active material may be improved. For example, in Chemical Formula 1, 0.001≤x1≤0.005, 0.002≤x1≤0.005, 0.003≤x1≤0.005, or x1=0.004, and in Chemical Formula 2, 0.001≤x2≤0.005, 0.002≤x2≤0.005, 0.003≤x2≤0.005, or x2=0.004, in which case cycle-life characteristics of the lithium iron phosphate-based positive electrode active material may be improved.

The first positive electrode active material is in the form of primary particles, and an average particle diameter of the primary particles of the first positive electrode active material may be less than about 2 µm. The average particle diameter of the primary particles of the first positive electrode active material may be, for example, greater than or equal to about 0.1 µm less than about 2 µm, from about 0.1 µm to about 1.8 µm, from about 0.1 µ m to about 1.6 µm, from about 0.1 µm to about 1.4 µm, from about 0.1 µm to about 1.2 µm, from about 0.1 µm to about 1 µm, from about 0.1 µm to about 0.8 µm, from about 0.2 µm to about 0.8 µm, from about 0.3 µm to about 0.7 µm, or about 0.5 µm. The average particle diameter of the primary particles of the first positive electrode active material may be obtained by measuring the sizes of 20 primary particles of the first positive electrode active material in an electron microscope image of the surface or cross-section of the first positive electrode active material, and calculating an arithmetic mean of the size of each particle, wherein the size of each particle is defined as a diameter in the case of a spherical particle, and as a square root of a product of a major axis length and a minor axis length in the case of a non-spherical particle. The first positive electrode active material may have a form of nano-sized primary particles. The average particle diameter of the primary particles of the first positive electrode active material may be smaller than the average particle diameter of the primary particles of the second positive electrode active material described herein. That is, the primary particles of the first positive electrode active material and the primary particles of the second positive electrode active material within the secondary particles may be distinguished based on particle size.

According to some example embodiments, the first positive electrode active material may have primary particles that are small and uniform in size. Accordingly, the composite positive electrode active material including the first positive electrode active material has high charge/discharge capacity and excellent cycle-life characteristics.

In addition, as measured by an SEM image of a cross-section of the composite positive electrode active material, an arithmetic mean size of the primary particles of the first positive electrode active material may be less than or equal to about 200 nm, about 50 nm to about 200 nm, or about 100 nm to about 200 nm, and the standard deviation of the arithmetic mean size may be less than or equal to about 100 nm, less than or equal to about 50 nm, less than or equal to about 30 nm, or less than or equal to about 25 nm, and may be greater than or equal to about 5 nm, greater than or equal to about 10 nm, greater than or equal to about 12 nm, or greater than or equal to about 15 nm. The arithmetic mean size and standard deviation of the primary particles of the first positive electrode active material may be obtained by measuring the size of 20 random primary particles of the first positive electrode active material in an SEM image or TEM image of the surface or cross-section of the first positive electrode active material, and calculating the arithmetic mean value and the standard deviation of the arithmetic mean size value, wherein the size of each particle is defined as a diameter in the case of a spherical particle, and as a square root of a product of a major axis length and a minor axis length in the case of a non-spherical particle.

The first positive electrode active material may further include a carbon coating layer on the surface of the primary particles. Because the specific details of the carbon coating layer may be explained in the same way as described in the second fired product, they are omitted herein.

Based on 100 wt% of the first positive electrode active material, the carbon coating layer may be included in an amount of about 0.1 wt% to about 3.9 wt%, for example, about 0.5 wt% to about 3.9 wt%, about 1 wt% to about 3.9 wt%, about 1.5 wt% to about 3.9 wt%, or about 1.7 wt% to about 3.9 wt%. The amount of the carbon coating layer may be analyzed by, for example, completely combusting the first positive electrode active material at a high temperature of about 1200 °C to about 1400 °C and in an oxygen atmosphere to convert carbon and sulfur in the first positive electrode active material into CO₂ (or CO) and SO₂ forms, respectively. An amount of the carbon coating layer may be the carbon content based on 100 wt% of the first positive electrode active material.

### Preparing First Slurry

The above step is a process of mixing the first positive electrode active material and the second positive electrode active material including a lithium manganese-based composite oxide and having a form of primary particles and wet milling them to prepare a first slurry. Specific details regarding the first positive electrode active material may be described in the same manner as described herein, and are therefore omitted herein.

The second positive electrode active material includes a lithium manganese-based composite oxide. The lithium manganese-based oxide included in the second positive electrode active material may have a spinel structure. The lithium manganese-based oxide with a spinel structure has a cubic crystal structure, and, because the lithium manganese-based oxide has a three-dimensional crystal structure, a movement path of lithium ions is short, ionic conductivity is high, and the overall structure does not collapse when lithium ions are removed, making the lithium manganese-based oxide very stable.

The lithium manganese-based oxide may be a lithium manganese-based oxide having a spinel structure with LiMn₂O₄ as its basic composition. The lithium manganese-based oxide may further contain, in addition to manganese, aluminum, magnesium, yttrium, or a combination thereof and may not contain cobalt or may contain a very small amount of cobalt. For example, the content of cobalt in the lithium manganese-based oxide, based on 100 mol% of metals excluding lithium, may be 5 wt% or less, 3 wt% or less, or 1 wt% or less, and may be 0 wt% or more.

The lithium manganese-based oxide may be represented, for example, by Chemical Formula 3.

[Chemical Formula 3] Liₐ₃Mnx₃M³y₃O_{4-b3}X_{b3}

In Chemical Formula 3, 0.9≤a3≤1.8, 1.7≤x3≤2, 0≤y3≤0.3, 1.9≤x3+y3≤2.1, and 0≤b3≤0.1, M³ is Al, B, Ba, Ca, Ce, Cr, Fe, Mg, Mo, Nb, Si, Sn, Sr, Ti, V, W, Y, Zr, or a combination thereof, and X is F, P, S, or a combination thereof.

In Chemical Formula 3, 1.8≤x3≤2 and 0≤y3≤0.2, 1.9≤x3≤2 and 0≤y3≤0.1, or 1.7≤x3<2 and 0<y3≤0.3.

Specifically, the lithium manganese-based oxide may be represented by Chemical Formula 4.

[Chemical Formula 4] Liₐ₄Mnₓ₄Al_{y4}Mg_{z4}M⁴_{w4}O_{4-b4}X_{b4}

In Chemical Formula 4, 0.9≤a4≤1.8, 1.7≤x4<2.0, 0<y4≤0.015, 0<z4≤0.010, 0≤w4<0.3, 1.9≤x4+y4+z4+w4≤2.1, and 0≤b4≤0.1, M⁴ is B, Ba, Ca, Ce, Cr, Fe, Mo, Nb, Si, Sn, Sr, Ti, V, W, Y, Zr, or a combination thereof, and X is F, P, S, or a combination thereof.

The second positive electrode active material is in a form of secondary particles in which a plurality of primary particles are agglomerated, and an average particle diameter of the secondary particles of the second positive electrode active material may be about 2 µm to about 10 µm, about 3 µm to about 10 µm, about 4 µm to about 10 µm, about 5 µm to about 10 µm, about 6 µm to about 10 µm, about 7 µm to about 10 µm, or about 8 µm to about 10 µm. The average particle diameter may be obtained by measuring the sizes of 20 secondary particles of the second positive electrode active material from a scanning electron microscope image of the secondary particles of the second positive electrode active material-wherein, in the case of spherical particles, the diameter is measured, and in the case of non-spherical particles, the square root of the product of the major axis length and the minor axis length is measured- and then calculating the arithmetic mean of the size of each primary particle of the second positive electrode active material.

The second positive electrode active material may further include a coating layer on the surface of the the secondary particles and/or the primary particles constituting the secondary particles . The coating layer may include a compound including an element of Al, Ti, W, B, F, P, Mg, Ni, Co, Fe, Cr, V, Cu, Ca, Zn, Zr, Nb, Mo, Sr, Sb, Bi, Si, S, or a combination thereof. When the coating layer including the compound is formed on the surface of the second positive electrode active material, contact between the lithium manganese-based oxide and the electrolyte is blocked, thereby suppressing gas generation during charging and discharging and suppressing manganese from being eluted at high temperatures. For example, the coating layer may include ZnO, Al₂O₃, TiO₂, WO₃, MgO, CaO, B₂O₃, NbO₂, SrO, CrO, Mo₂O₅, Bi₂O₃, SiO₂, or a combination thereof. The coating layer may be present discontinuously or may be present continuously.

The second positive electrode active material may be manufactured by a known method or may be a commercially available product.

The second positive electrode active material may be prepared by a solid-state reaction method or the like. For example, a lithium precursor and a manganese precursor may be mixed at a predetermined molar ratio and then heat-treated under an oxygen atmosphere.

Examples of the lithium precursor may include Li₂CO₃, LiOH, and LiNO₃, and examples of the manganese precursor may include Mn₂O₃, MnO₂, and Mn₃O₄.

The mixing may be performed by a dry mixing method or a wet mixing method, and may utilize a method such as ball milling. Thereafter, the mixture may be calcined at a temperature of about 600°C to about 1000°C under an oxygen atmosphere or an air atmosphere to form a spinel-structured lithium manganese oxide. If necessary, pulverization, classification, or sieving may be additionally performed.

A weight ratio of mixing of the first positive electrode active material and the second positive electrode active material may be about 50:50 to about 99:1, about 55:45 to about 95:5, or about 60:40 to about 9:1. When the weight ratio of the first positive electrode active material and the second positive electrode active material satisfies the above range, operation at high voltage is possible while securing price competitiveness, and charge/discharge efficiency, low-temperature discharge capacity, cycle-life characteristics, and high-temperature storage characteristics may be improved, and powder characteristics may be improved, so that pellet density may be improved. In addition, when a second positive electrode active material having a relatively large average particle diameter is included in an excessive amount, it is difficult to properly perform spray drying, and even if spray drying is performed, it may be difficult to form an assembly as in some example embodiments.

A first slurry may be prepared by adding a first solvent to the first positive electrode active material and the second positive electrode active material during wet milling. In this case, the specific type of the first solvent may be described in the same way as described herein for the second solvent, and thus is omitted herein. The wet milling may be performed using a method such as ultrasonic dispersion, stirring dispersion, homogenizer, high-shear mixer, jet mill, ball milling, bead milling, and the like, and is not specifically limited as long as it is a method for wet milling the first positive electrode active material and the second positive electrode active material. For example, in some embodiments, the wet milling may be performed using a ball milling method with zirconia balls, wherein the wet milling may be conducted by rotating a milling container at a rotational speed of from about 10 rpm to about 100 rpm for about 10 minutes to about 3 hours.

In this process, the secondary particles of the second positive electrode active material may be separated into primary particles and may constitute the composite positive electrode active material prepared according to a spray-drying process described later. An average particle diameter of the primary particles of the second positive electrode active material constituting the composite positive electrode active material may be greater than the average particle diameter of the above-described primary particles of the first positive electrode active material. That is, the primary particles of the first positive electrode active material and the primary particles of the second positive electrode active material in the secondary particle may be distinguished based on particle size. The average particle diameter of the primary particles of the second positive electrode active material may be greater than or equal to about 2 µm. For example, the average particle diameter of the primary particles of the second positive electrode active material may be from about 2 µm to about 10 µm, from about 2 µm to about 9.5 µm, from about 2 µm to about 9 µm, from about 2.5 µm to about 9 µm, from about 3 µm to about 9 µm, from about 3 µm to about 7 µm, or from about 3 µm to about 5 µm. The average particle diameter of the primary particles of the second positive electrode active material may be, for example, a value obtained by measuring sizes of 20 arbitrary primary particles of the second positive electrode active material in a scanning electron microscope image of the composite positive electrode active material and calculating an arithmetic mean thereof, wherein the size is a diameter in a case of spherical particles or a square root of a product of a major axis length and a minor axis length in a case of non-spherical particles.

### Preparing First Dried Product

The above step is a process of preparing a first dried product by adding the first slurry to a spray dryer and spray drying the first slurry.

The first slurry may be added to a spray dryer and sprayed to generate droplets including a desired uniform composition, and then the formed droplets may be dried to prepare a first dried product. In this case, the solvent in the droplets evaporates, and the remaining solids may be dried in the form of particles.

The spray dryer may include an ultrasonic spray device, one- and two-fluid air nozzle spray device, an ultrasonic nozzle spray device, a filter expansion droplet generator (FEAG), and a disk-type droplet generator, and any known spray dryer may be used without limitation.

An amount of the first slurry added may vary depending on the spray dryer, but may be appropriately adjusted. For example, the addition speed of the first slurry may be less than or equal to about 1 kg/min, for example, less than about 1 kg/min, less than or equal to about 0.9 kg/min, less than or equal to about 0.8 kg/min, less than or equal to about 0.7 kg/min, less than or equal to about 0.6 kg/min, or less than or equal to about 0.5 kg/min, and greater than or equal to about 0.01 kg/min, greater than or equal to about 0.05 kg/min, greater than or equal to about 0.1 kg/min, greater than or equal to about 0.15 kg/min, greater than or equal to about 0.2 kg/min, greater than or equal to about 0.3 kg/min, or greater than or equal to about 0.4 kg/min. The addition speed of the first slurry is a value converted on a solid content basis, and is defined as an amount of the first slurry supplied per minute (min) based on a mass of solid content in the first slurry. If the addition speed of the first slurry added to the spray dryer satisfies the above range, the drying efficiency is improved, a powder having a narrow particle size distribution and a relatively uniform shape may be formed, and clogging and contamination inside the dryer may be prevented.

The spray drying may be performed at a temperature of greater than or equal to about 100 °C for drying the components and evaporating the solvent, and may be performed at a temperature of, for example, about 150 °C to about 400 °C, about 150 °C to about 300 °C, or about 200 °C to about 250 °C.

The first dried product obtained according to the above steps may have a particle form including primary particles of the first positive electrode active material and primary particles of the second positive electrode active material, and for example, may have a form of secondary particles in which the primary particles of the first positive electrode active material and primary particles of the second positive electrode active material are agglomerated, wherein the secondary particles may be expressed as an assembly. The first dried product may correspond to or be identical to the composite positive electrode active material in the present specification.

The method for preparing the composite positive electrode active material may further include firing the first dried product to prepare a first fired product, after the adding of the first slurry to the spray dryer and spray drying the same to prepare a first dried product. The preparing of the first fired product may be expressed as a first firing step to distinguish it from spray drying and firing the second slurry. The composite positive electrode active material may be further strengthened by performing a first firing step after spray drying, thereby further stabilizing the crystal structure and significantly improving the electrochemical characteristics, mechanical strength, and cycle-life stability of the composite positive electrode active material.

The first firing step may be performed under vacuum or inert gas and at a temperature of about 300 °C to about 1000 °C, for example, about 300 °C to about 500 °C, or about 350 °C to about 450 °C. The inert gas may be argon, nitrogen, and the like. If the above firing temperature satisfies the above range, electrochemical characteristics, mechanical strength, and cycle-life stability may be greatly improved.

The first positive electrode active material may have a particle form including primary particles of the first positive electrode active material and primary particles of the second positive electrode active material, and may have a form of secondary particles or an assembly form in which, for example, primary particles of the first positive electrode active material and primary particles of the second positive electrode active material are agglomerated. The first fired product may also correspond to the composite positive electrode active material in the present specification, or may be the same.

In the case of the composite positive electrode active material manufactured according to the method for preparing the composite positive electrode active material according to some example embodiments, the overall battery performance may be improved, and the average voltage may be increased compared to when the first positive electrode active material is used alone, and the average voltage may be increased while securing price competitiveness compared to when the first positive electrode active material and the second positive electrode active material are simply mixed, and the charge/discharge efficiency, low-temperature discharge capacity, cycle-life characteristics, and high-temperature storage characteristics may be improved, and the powder characteristics may be improved, so that the pellet density may be improved.

### Composite Positive Electrode Active Material

A composite positive electrode active material according to some example embodiments includes a first positive electrode active material including a lithium iron phosphate-based compound and in a form of primary particles; and a second positive electrode active material including a lithium manganese-based composite oxide and in a form of primary particles, wherein the composite positive electrode active material has a particle form including a plurality of primary particles of the first positive electrode active material and a plurality of primary particles of the second positive electrode active material. Herein, the particle form of the composite positive electrode active material may be a form of secondary particles or an assembly form in which the primary particles of the first positive electrode active material and primary particles of the second positive electrode active material are agglomerated. That is, primary particles of the first positive electrode active material and primary particles of the second positive electrode active material may exist within the composite positive electrode active material particles. The composite positive electrode active material particles are formed by agglomeration of a plurality of primary particles, and some of the primary particles are the primary particles of the first positive electrode active material, and the remaining portions are the primary particles of the second positive electrode active material. This structure is distinguished from a core-shell structure in which the particles of the first positive electrode active material are coated around a surface of the core of the second positive electrode active material particle, thereby having a shell structure. In the present disclosure, the particle form of the composite positive electrode active material may be referred to as a form of secondary particles or an assembly form, and those described as the form of the secondary particles or the assembly form should be understood to refer to composite positive electrode active material particles.

The particle form of the composite positive electrode active material according to some example embodiments is different from the conventional form in which a lithium iron phosphate-based compound and a lithium manganese-based composite oxide are mixed. When conventionally, a lithium iron phosphate-based compound and a lithium manganese-based composite oxide are mixed and used as a positive electrode active material, there is a problem in that high-temperature storage characteristics deteriorate due to creation of spaces between the particles of the lithium iron phosphate-based compound and the particles of the lithium manganese-based composite oxide as charge and discharge are repeated after the formation of the electrode plate. However, the composite positive electrode active material according to some example embodiments may solve the above problem by having a particle form, specifically, a single secondary particle form by agglomerating primary particles of the first positive electrode active material and primary particles of the second positive electrode active material, more specifically, an assembly form, including a first positive electrode active material in the form of primary particles including a lithium iron phosphate-based compound and a second positive electrode active material in the form of primary particles including a lithium manganese-based composite oxide.

The composite positive electrode active material particles may have a spherical or elliptical spherical shape by closely agglomerating the primary particles of the first positive electrode active material and the primary particles of the second positive electrode active material. An average particle diameter of the composite positive electrode active material may be, for example, about 3 µm to about 20 µm, about 6 µm to about 20 µm, about 6 µm to about 18 µm, about 8 µm to about 18 µm, about 10 µm to about 18 µm, or about 12 µm to about 18 µm. An average particle diameter of the composite positive electrode active material particles may be, for example, obtained by randomly selecting 20 composite positive electrode active material particles from an electron microscope image of the composite positive electrode active material, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

The amounts of the first positive electrode active material and the second positive electrode active material in the composite positive electrode active material may be appropriately controlled. For example, the first positive electrode active material may be included in an amount of about 50 wt% to about 99 wt%, about 55 wt% to about 95 wt%, or about 60 wt% to about 90 wt% based on 100 wt% of the composite positive electrode active material, and the second positive electrode active material may be included in an amount of about 1 wt% to about 50 wt%, about 5 wt% to about 45 wt%, or about 10 wt% to about 40 wt% based on 100 wt% of the composite positive electrode active material. If the first positive electrode active material and the second positive electrode active material in the composite positive electrode active material are included so as to satisfy the above ranges, the battery may operate at high voltage, and the battery performance, including the initial charge/discharge capacity, efficiency, discharge capacity at low temperature (-20 °C), and high-temperature storage characteristics, may be improved overall.

The composite positive electrode active material may further include a carbon coating layer on the particle surface of the composite positive electrode active material. The carbon coating layer may improve electrical conductivity of the composite positive electrode active material and thereby reduce the resistance of the positive electrode including the same. The carbon coating layer may be described in the same way as the carbon coating layer on the surface of the primary particles of the first positive electrode active material of the aforementioned method for preparing the composite positive electrode active material, and is therefore omitted herein.

The number of primary particles of the second positive electrode active material in particle of the composite positive electrode active material may be 10 or less, for example, 9 or less, 8 or less, 7 or less, or 6 or less, and 1 or more, 2 or more, or 3 or more. For example, the number of primary particles of the second positive electrode active material in particle of the composite positive electrode active material may be in a range of 1 to 10, 2 to 10, 3 to 10, 3 to 9, 3 to 8, 3 to 7, or 3 to 6. The number of primary particles of the second positive electrode active material in particle of the composite positive electrode active material may be measured by photographing a cross-section or surface of the composite positive electrode active material using a scanning electron microscope. Herein, the first positive electrode active material and the second positive electrode active material within the composite positive electrode active material may be distinguished by particle size, and the number of primary particles of the second positive electrode active material may be determined by counting the number of particles having a particle size of greater than or equal to about 2 µm within a single composite positive electrode active material particle, wherein the particle size refers to a diameter in the case of spherical particles and to a square root of a product of a major axis length and a minor axis length in the case of non-spherical particles. Here, the number of primary particles of the second positive electrode active material may be an average value of the numbers of primary particles of the second positive electrode active material in each of a plurality of composite positive electrode active material particles.

The composite positive electrode active material particles may include pores therein, and the porosity, which is the ratio of the area occupied by the pores to the cross-sectional area of the composite positive electrode active material particles, may be about 10% to about 50%, for example, about 10% to about 40%, or about 10% to about 30%. A cross-section of the secondary particles may be obtained by cutting the secondary particles using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the secondary particles may be an average value of porosities measured with respect to a plurality of secondary particles, and may be, for example, obtained by measuring the porosity of at least 20 individual secondary particles and calculating an average value of the porosity at least 20 individual secondary particles. The porosity may be, for example, obtained by cutting a composite positive electrode active material particle using a focused ion beam (FIB) to obtain a cross-section, and measuring a ratio of the area occupied by pores within a cross-section of the composite positive electrode active material particle to a cross-sectional area of the composite positive electrode active material particle using an image analysis program such as Image J on a scanning electron microscope image of the cross-section. If the porosity within the composite positive electrode active material particles satisfies the above range, the primary particles may be filled between the pores within the secondary particles during positive electrode compressing, thereby improving the pellet density or positive electrode density, and thus improving the capacity characteristics and energy density.

A pellet density of the composite positive electrode active material may be greater than or equal to about 2.4 g/cc, and may be about 2.4 g/cc to about 3 g/cc, about 2.45 g/cc to about 2.9 g/cc, about 2.5 g/cc to about 2.8 g/cc, or about 2.5 g/cc to about 2.65 g/cc. The pellet density of the composite positive electrode active material may be measured by placing 3 g of the composite positive electrode active material in a mold, maintaining the composite positive electrode active material in the mold at 4 tons for 30 seconds at a temperature of 25°C, measuring the thickness of the pellet, calculating the pellet volume using the thickness of the pellet and the diameter of the mold, and dividing the mass of the composite positive electrode active material by the calculated volume.

If the pellet density of the composite positive electrode active material satisfies the above range, powder characteristics may be improved, thereby improving capacity characteristics. If the porosity of the composite positive electrode active material particles satisfies the above range, the primary particles may be further filled between the pores in the secondary particles during positive electrode compressing, and accordingly, the pellet density of the composite positive electrode active material may be further improved as in the herein range, and accordingly, the energy density of the battery may be further increased.

The composite positive electrode active material may be prepared, for example, according to the aforementioned method for preparing the composite positive electrode active material. In this case, the amounts of the composite positive electrode active material prepared according to the aforementioned method for preparing the composite positive electrode active material may all be applied equally, and therefore are omitted herein.

### Rechargeable Lithium Battery

A rechargeable lithium battery according to some example embodiments includes: a positive electrode including a positive electrode current collector, and a positive electrode active material layer disposed on the positive electrode current collector and including the composite positive electrode active material prepared by the aforementioned method for preparing the composite positive electrode active material; a negative electrode; and an electrolyte. The rechargeable lithium battery may include a positive electrode, a negative electrode, a separator between the positive electrode and the negative electrode, and an electrolyte.

A rechargeable lithium battery according to some example embodiments may have overall improved battery performance by including the aforementioned composite positive electrode active material, and specifically, may have improved 1C cycle-life and high-temperature storage characteristics.

When the rechargeable lithium battery is subjected to an initial charge/discharge cycle of charging at 0.2 C-rate and discharging at 0.2 C-rate, and then the cycle of charging at 1 C-rate and discharging at 1 C-rate is repeated 50 times or more, and the ratio (cycle-life) of the 50th cycle discharge capacity to the initial discharge capacity is calculated according to Equation 2, the cycle-life of the rechargeable lithium battery may be greater than or equal to about 90%, indicating that cycle-life characteristics at high voltage are improved compared to a simply mixed positive electrode active material. For example, the cycle-life of the rechargeable lithium battery may be greater than or equal to about 91%, greater than or equal to about 92%, greater than or equal to about 93%, or greater than or equal to about 93.5%, and may be less than or equal to about 100%, less than or equal to about 99%, less than or equal to about 98%, less than or equal to about 97%, or less than or equal to about 96%. [Equation 2] 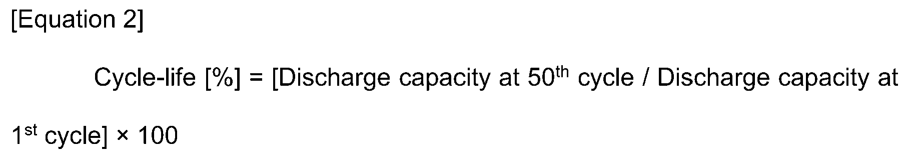 Cycle-life [%] = [Discharge capacity at 50th cycle / Discharge capacity at 1st cycle] × 100

In addition, when the rechargeable lithium battery is left at a high temperature (e.g., about 45 °C) for 7 days and the capacity retention rate is measured to evaluate the high-temperature storage characteristics, the high-temperature capacity retention rate is greater than or equal to about 75%, indicating that the high-temperature storage characteristics may be improved compared to the simply mixed positive electrode active material. For example, the high-temperature capacity retention rate of the rechargeable lithium battery may be greater than or equal to about 77%, or greater than or equal to about 79%, and may be less than or equal to about 100%, less than or equal to about 95%, or less than or equal to about 91%.

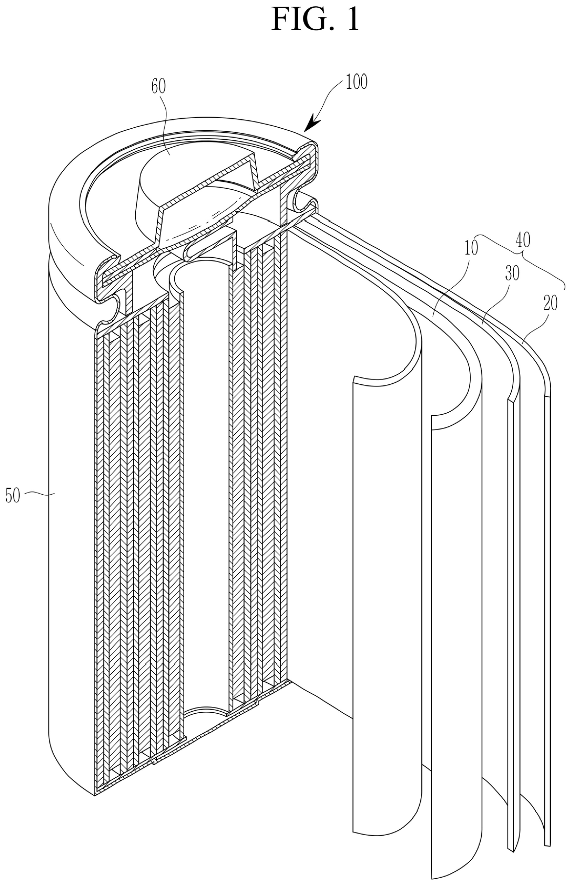

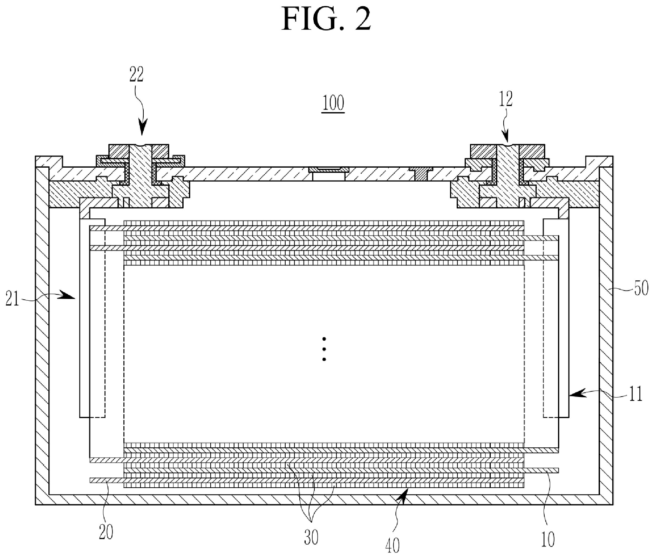

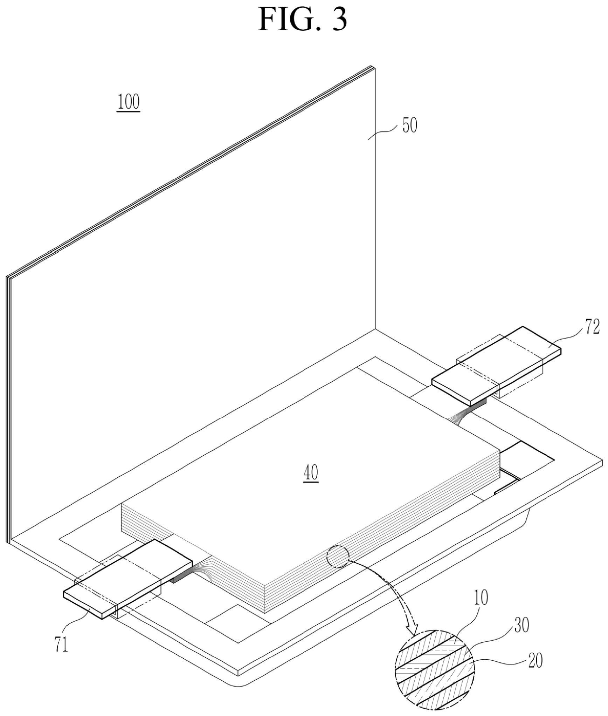

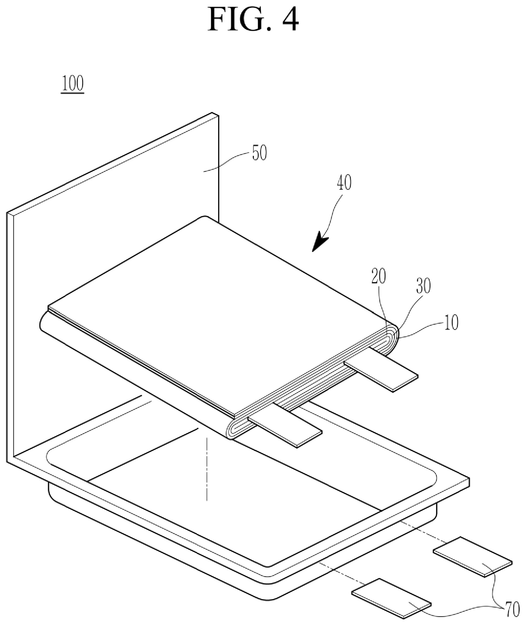

The rechargeable lithium battery may be classified into cylindrical, prismatic, pouch-shaped, coin-shaped, and the like depending on their shapes. For example, FIG. 1 is a schematic view showing a cross-section of a cylindrical rechargeable lithium battery cut along a vertical axis and an electrode assembly 40 extending therefrom, FIG. 2 is a cross-sectional view of a prismatic rechargeable lithium battery, and FIGS. 3 and 4 are schematic exploded perspective views of pouch-type rechargeable lithium batteries. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown).

The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. The rechargeable lithium battery 100 may include an electrode tab 70 that serves as an electrical path for conducting current formed in an electrode assembly 40 to the outside. For example, the electrode tab 70 may be disposed in the same direction as in FIG. 4, or the positive electrode tab 71 and the negative electrode tab 72 may be disposed in opposite directions as in FIG. 3.

### Positive Electrode

The positive electrode current collector is not particularly limited as long as it has conductivity and does not cause a chemical change in the rechargeable lithium battery, and may be an aluminum foil or a stainless steel foil having a thickness of about 10 µm to about 15 µm.

The positive electrode active material layer includes the composite positive electrode active material prepared by the aforementioned method for preparing the composite positive electrode active material. The specific details of the method for preparing the composite positive electrode active material and the composite positive electrode active material prepared thereby may be described in the same manner as described herein, and are therefore omitted herein.

An amount of the composite positive electrode active material may be about 60 wt% to about 99.9 wt%, about 70 wt% to about 99.8 wt%, about 80 wt% to about 99 wt%, or about 90 wt% to about 98 wt% based on 100 wt% of the positive electrode active material layer.

The positive electrode active material layer may optionally further include a binder, a conductive material, or a combination thereof.

The binder may serve to adhere the composite positive electrode active material particles well to each other and also to adhere the composite positive electrode active material well to the positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, nylon, and the like, but are not limited thereto.

The conductive material is included to provide electrode conductivity and any electrically conductive material may be used as a conductive material unless it causes a chemical change in a battery. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

In the positive electrode active material layer, an amount of the binder may be about 0.1 wt% to about 5 wt% based on 100 wt% of the positive electrode active material layer, and an amount of the conductive material may be about 0.1 wt% to about 5 wt% based on 100 wt% of the positive electrode active material layer.

The positive electrode active material layer may further include other positive electrode active materials within a range that does not impede the purpose of the present disclosure in addition to the aforementioned components, or may further include an irreversible positive electrode additive.

In addition to the aforementioned composite positive electrode active material, the positive electrode active material layer may further include a positive electrode active material having a form of primary particles and including the aforementioned lithium iron phosphate-based compound (hereinafter, "third positive electrode active material") and/or a positive electrode active material having a form of primary particles and including the aforementioned lithium cobalt-based composite oxide (hereinafter, "fourth positive electrode active material"). Here, the third positive electrode active material and/or the fourth positive electrode active material may each independently be those in which the first positive electrode active material and/or the second positive electrode active material included in the composite positive electrode active material are not assembled and are present in a separated state. In this case, the average particle diameter of the primary particles of the third positive electrode active material may be the same as described above for the first positive electrode active material, and the average particle diameter of the primary particles of the fourth positive electrode active material may be the same as described above for the second positive electrode active material. Here, the third positive electrode active material and/or the fourth positive electrode active material are present in a non-aggregated, separated state without being agglomerated with the above-described composite positive electrode active material to form an assembled structure.

If the positive electrode active material layer further includes the third positive electrode active material and/or the fourth positive electrode active material in addition to the composite positive electrode active material, a weight ratio of the composite positive electrode active material to the third positive electrode active material, the fourth positive electrode active material, or a combination thereof may be about 1:9 to about 9:1, and may be appropriately added depending on the purpose. In this case, the third positive electrode active material may further include the aforementioned carbon coating layer on the surface of the primary particles, and because the specific details of the carbon coating layer are as described herein, they are omitted herein.

The irreversible positive electrode additive refers to a compound that acts as a sacrificial positive electrode that can compensate for the conversion to irreversible Li that no longer participates in the charge/discharge reaction by participating in the formation of a SEI (solid electrolyte interface) film on the negative electrode surface during charge/discharge. The irreversible positive electrode additive is a compound that can be decomposed during the formation process to provide Li and does not participate in the subsequent charge/discharge process. By adding such an irreversible positive electrode additive, the consumed lithium may be replenished, thereby compensating for lithium loss and improving the energy density, cycle-life, and stability of the battery.

The irreversible positive electrode additive may include a lithium iron-based oxide, a lithium cobalt-based oxide, a lithium nickel-based oxide, or a combination thereof.

The lithium iron-based oxide may be Li₅FeO₄, LiFeO₂, LiFe₅O₈, or a combination thereof, and among these, using Li₅FeO₄ may provide a lot of lithium in the formation process, which may greatly compensate for irreversible lithium, and thus greatly obtain the effect of the irreversible positive electrode additive.

The lithium cobalt-based oxide may be Li₆CoO₄, and the use of Li₆CoO₄ may provide a lot of lithium in the formation process, which can greatly compensate for the irreversible lithium, and thus greatly obtain the effect of the irreversible positive electrode additive.

The lithium nickel-based oxide may be Li₂NiO₂, and the use of Li₂NiO₂ may provide a lot of lithium in the formation process, which may consequently compensate for a lot of irreversible lithium, and thus greatly obtain the effect of the irreversible positive electrode additive.

An average particle diameter (D₅₀) of the irreversible positive electrode additive is not specifically limited, but may be, for example, about 0.5 µm to about 20 µm, for example, about 0.5 µm to about 10 µm, about 0.5 µm to about 5 µm, or about 0.5 µm to about 3 µm.

### Negative Electrode

A negative electrode for a rechargeable lithium battery includes a negative electrode current collector and a negative electrode active material layer on the negative electrode current collector. The negative electrode active material layer includes a negative electrode active material, and may optionally further include a binder, a conductive material, or a combination thereof.

The negative electrode current collector is not particularly limited as long as it has conductivity without causing chemical changes in the rechargeable lithium battery, and may be a copper foil having a thickness of about 10 µm to about 15 µm.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be a carbon-based negative electrode active material, for example, crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy (wherein Q is an element selected from an alkali metal, an alkaline earth metal, a Group 13 element, a Group 14 element (excluding Si), a Group 15 element, a Group 16 element, a transition metal, a rare earth element, and a combination thereof, and may be, for example, selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. The average particle diameter (D₅₀) of the silicon-carbon composite particles may be, for example, about 0.5 µm to about 20 µm. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, calcined coke, and the like.

When the silicon-carbon composite includes silicon and amorphous carbon, an amount of the silicon may be about 10 wt% to about 50 wt%, and an amount of the amorphous carbon may be about 50 wt% to about 90 wt% based on 100 wt% of the silicon-carbon composite. In addition, when the composite includes silicon, amorphous carbon, and crystalline carbon, an amount of silicon may be about 10 wt% to about 70 wt%, an amount of crystalline carbon may be about 1 wt% to about 60 wt%, and an amount of amorphous carbon may be about 15 wt% to about 50 wt% based on 100 wt% of the silicon-carbon composite.
Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. As used herein, when a definition is not otherwise provided, an average particle diameter (D₅₀) indicates a diameter of particle where a cumulative volume is about 50 vol% in a particle size distribution. The silicon particles may be present as silicon alone, in the form of a silicon alloy, or in an oxidized form. The oxidized form of the silicon may be represented as SiOₓ (0<x≤2). At this time, the atomic content ratio of Si:O, which indicates the degree of oxidation, may be about 99:1 to about 33:67.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, the mixing ratio may be about 1:99 to about 90:10 by weight.

The negative electrode active material may be included in an amount of about 90 wt% to about 99.8 wt%, or about 94 wt% to about 99 wt%, based on 100 wt% of the negative electrode active material layer.

The binder serves to well adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the binder may be about 0.1 wt% to about 5 wt% based on 100 wt% of the negative electrode active material layer, and an amount of the conductive material may be about 0.1 wt% to about 5 wt% based on 100 wt% of the negative electrode active material layer.

### Electrolyte

For example, an electrolyte for a rechargeable lithium battery is an electrolyte solution and includes a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or in combination of two or more, and when two or more types are used in combination, the mixing ratio may be appropriately adjusted depending on intended battery performances, which is widely understood by those working in the relevant field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ion conductivity and viscosity, and thus excellent performance can be achieved and lithium ions can move effectively.

### Separator

Depending on the type of rechargeable lithium battery, a separator may exist between the positive and negative electrodes. For example, the separator may include polyethylene, polypropylene, polyvinylidene fluoride, or a multilayer film of two or more layers, and may of course be a mixed multilayer film such as a polyethylene/polypropylene two-layer separator, a polyethylene/polypropylene/polyethylene three-layer separator, or a polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, and polytetrafluoroethylene (e.g., TEFLON^{®}), or a copolymer or mixture of two or more thereof. The porous substrate may include glass fibers, or may comprise a composite membrane of polymer and glass fibers.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles of Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Hereinafter, examples and comparative examples of the present disclosure are described. However, the examples described herein are only some example embodiments of the present disclosure, and the present disclosure is not limited to the examples described herein.

### Example 1-1

### (Preparation of a first electrode active material)

FePO₄ as an iron phosphate-based precursor and Li₂CO₃ as a lithium raw material were mixed in a molar ratio of 2:1 to prepare a raw material mixture. A carbon raw material was prepared by mixing glucose and polyethylene glycol in a weight ratio of 5:5. 90 wt% of the raw material mixture and 10 wt% of the carbon raw material were mixed to form a mixture, and distilled water as a second solvent was added to the mixture and then, wet-milled to prepare a second slurry. The wet milling was carried out using a ball milling apparatus. Specifically, a mixture of about 90 wt% of the raw material mixture and about 10 wt% of the carbon source material was introduced into a milling container having a capacity of about 5 L, together with about 3 kg of zirconia balls and about 2 kg of water, and the wet milling was performed by rotating the container at a rotational speed of about 100 rpm for about 3 hours. Herein, TiO₂ as a Ti raw material was added to the mixture during the wet milling, and the amount was adjusted such that Ti accounted for 0.4 mol% based on a total metal, excluding lithium, of a finally obtained lithium iron phosphate-based compound.

The wet-milled slurry was fed into a spray dryer (Büchi Mini Spray Dryer B-290) at 0.5 kg/min and then, spray-dried at 200°C to obtain a second dried product. This second dried product was fired at a temperature 750 °C for 8 hours to obtain a second fired product, which was pulverized into primary particles by using an air Jet mill device at 6000 rpm to obtain a first positive electrode active material. Through the pulverizing process, the second fired product, which included the lithium iron phosphate-based compound in the form of secondary particles in which a plurality of primary particles were agglomerated, was pulverized into a first positive electrode active material in which the plurality of primary particles were not agglomerated but separated. The first positive electrode active material was in the form of primary particles having an average particle diameter of 0.5 µm and a composition of LiFe_{0.996}Ti_{0.004}PO₄.

### (Preparation of a second electrode active material)

Li₂CO₃ and Mn₂O₃ were mixed at a molar ratio of 1.02:2.0, followed by heating from 25°C to 820°C at a heating rate of 5°C/min under an oxygen atmosphere, and maintaining at 820°C for 8 hours to obtain a calcined product. Thereafter, the obtained calcined product was sieved through a 325 mesh sieve to prepare a second positive electrode active material. At this time, the second positive electrode active material was in the form of secondary particles in which a plurality of primary particles were agglomerated, the average particle diameter of the secondary particles was 9 µm, and the composition thereof was Li_{1.02}Mn₂O₄. The secondary particles of the second positive electrode active material were separated into a form of primary particles by a wet milling process performed during a process of preparing a composite positive electrode active material described later, and the separated primary particles subsequently constituted secondary particles of the composite positive electrode active material prepared through a spray-drying process.

### (Preparation of Composite Positive Electrode Active Material)

The first positive electrode active material and the second positive electrode active material were mixed in a weight ratio of 9:1 using a mixer (L5MA) at 15 rpm for 30 minutes, and water was added as a first solvent to perform wet milling to prepare a first slurry, which was then added to a spray dryer (Büchi Mini Spray Dryer B-290) at 0.5 kg/min and spray-dried at 200°C to obtain a first dried product. The wet milling was performed using a ball milling apparatus. Specifically, about 3 kg of zirconia balls, about 2 kg of water, and about 2 kg of a mixture of the first positive electrode active material, the second positive electrode active material, and the irreversible positive electrode additive were introduced into a milling container having a capacity of about 5 L, and the container was rotated at a rotational speed of about 50 rpm for about 1 hour. At this time, the first dried product was a composite positive electrode active material in the form of secondary particles in which primary particles of the first positive electrode active material and primary particles of the second positive electrode active material were agglomerated.

### (2) Manufacturing of Positive Electrode

The composite positive electrode active material was mixed with polyvinylidene fluoride as a binder and carbon nanotube as a conductive material in a weight ratio of 96:2:2 (= positive electrode active material:binder:conductive material) to prepare a positive electrode active material composition. This composition was dispersed in an N-methyl pyrrolidone solvent to prepare a positive electrode active material slurry, which was coated on a 15 µm-thick Al foil and then, dried and compressed to manufacture a positive electrode.

### (3) Manufacturing of Rechargeable Lithium Battery Cell

97.5 wt% of graphite as a negative electrode active material, and 1.5 wt% of carboxymethyl cellulose and 1 wt% of styrene butadiene rubber as a binder were dispersed in distilled water to prepare a negative electrode active material slurry. This slurry was coated on a 10 µm-thick Cu foil and then, dried and compressed to manufacture a negative electrode.

Between the positive electrode and the negative electrode, a 10 µm-thick polyethylene separator was disposed to manufacture an electrode assembly, which was inserted into a case, and an electrolyte was injected thereinto to manufacture a rechargeable lithium battery cell (a pouch-type cell of 100 mAh level). The electrolyte was prepared by mixing EC (ethylenecarbonate):EMC (ethylmethylcarbonate):DMC (dimethylcarbonate) in a volume ratio of 2:4:4 and dissolving 1.15 M LiPF₆ in the mixed solvent.

### Examples 1-2 to 1-4

Composite positive electrode active materials, positive electrodes, and rechargeable lithium battery cells according to Examples 1-2 to 1-4 were manufactured by substantially the same method as Example 1-1, except that in the process of the section '(1) Preparation of Composite Positive Electrode Active Material' of Example 1-1, the first positive electrode active material and the second positive electrode active material were not mixed in a weight ratio of 9:1 when preparing the first slurry, but were mixed in a weight ratio described in Table 1.

**(Table 1)**

| | Composition of first positive | Weight ratio of first positive |
|---|---|---|
| | electrode active material | electrode active material and second positive electrode active material |
| Example 1-1 | LiFe_{0.996}Ti_{0.004}PO₄ | 9:1 |
| Example 1-2 | LiFe_{0.996}Ti_{0.004}PO₄ | 8:2 |
| .Example 1-3 | LiFe_{0.996}Ti_{0.004}PO₄ | 7:3 |
| Example 1-4 | LiFe_{0.996}Ti_{0.004}PO₄ | 6:4 |

### Examples 2-1 to Example 2-4

Composite positive electrode active materials, positive electrodes, and rechargeable lithium battery cells according to Examples 2-1 to 2-4 were manufactured in substantially the same manner as Examples 1-1 to 1-4, except that in the process of the section '(1) Preparation of Composite Positive Electrode Active Material' of Examples 1-1 to 1-4, the first slurry was added to a spray device, spray-dried to obtain a first dried product, and then further fired at a temperature of 400 °C for 8 hours under a nitrogen atmosphere to produce a first fired product, which was then used as a composite positive electrode active material in the process of the section '(2) Manufacturing of Positive Electrode'. Herein, the composite positive electrode active material is the same as the first fired product.

### Comparative Examples 1 to 4

Positive electrodes and rechargeable lithium battery cells according Comparative Examples 1 to 4 were manufactured in substantially the same manner as Examples 1-1 to 1-4, except that the first positive electrode active material and the second positive electrode active material prepared in the process of the section '(1) Preparation of Composite Positive Electrode Active Material' in the process of the section '(2) Manufacturing of Positive Electrode' in Examples 1-1 to 1-4 were simply mixed using a mixer (L5M-A) at 15 rpm for 30 minutes at the same weight ratio as the first positive electrode active material and the second positive electrode active material according to Examples 1-1 to 1-4 described in Table 1, as the positive electrode active material. In the positive electrode active material, an assembly in which the first positive electrode active material and the second positive electrode active material were agglomerated did not exist but they existed in a dispersed state.

### Evaluation Example 1: Evaluation of Composite Positive Electrode Active Material

### (1) Porosity Evaluation

The porosity of the composite positive electrode active materials prepared in Examples 1-1 to 1-4, and Examples 2-1 to 2-4 was measured and shown in Table 2. Using the Image J image analysis program, a ratio of the area occupied by pores within the cross-section of the secondary particles to the cross-sectional area of the secondary particles was measured from a scanning electron microscope image of the cross-section of the secondary particles of the composite positive electrode active material, and this was expressed as the porosity in Table 2.

### (2) Particle Analysis

The composite positive electrode active materials prepared in Examples 1-1 to 1-4 and Examples 2-1 to 2-4 were photographed using a scanning electron microscope, and with reference to the photographs, the average particle diameters of the secondary particles, the average particle diameters, the arithmetic mean size, and the standard deviation of the primary particles of the first positive electrode active material, and the average particle diameters of the primary particles of the second positive electrode active material were measured, and are shown in Table 2.

Specifically, the average particle diameter of secondary particles was obtained by randomly selecting 20 secondary particles in the scanning electron microscope image for the cross-section of the composite positive electrode active materials, measuring the size of each secondary particle, and calculating an arithmetic mean of the size of each secondary particle, wherein the size of each secondary particle is defined as a diameter in the case of a spherical particle, and as a square root of a product of a major axis length and a minor axis length in the case of a non-spherical particle. The average particle diameter of the primary particles of the first positive electrode active material and the average particle diameter of the primary particles of the second positive electrode active material were also obtained by randomly selecting 20 primary particles of the first positive electrode active material and 20 primary particles, respectively, from the second positive electrode active material in the scanning electron microscope image of each composite positive electrode active material, measuring the size of each primary particle, and calculating an arithmetic mean of the size of each primary particle, wherein the size of each primary particle is defined as a diameter in the case of a spherical particle, and as a square root of a product of a major axis length and a minor axis length in the case of a non-spherical particle. In this case, within the composite positive electrode active material, as described above, particles having a particle size of less than about 2 µm are regarded as primary particles of the first positive electrode active material and their particle sizes are measured to obtain an arithmetic mean, whereas particles having a particle size of greater than or equal to about 2 µm are regarded as primary particles of the second positive electrode active material and their particle sizes are measured to obtain an arithmetic mean.

The arithmetic mean size and standard deviation of the first positive electrode active material were obtained by measuring sizes of 20 primary particles of the first positive electrode active material from the scanning electron microscope image of the cross-section of the composite positive electrode active material-wherein the particle size is defined as a diameter in the case of spherical particles and as a square root of a product of a major axis length and a minor axis length in the case of non-spherical particles-and calculating the arithmetic mean and the standard deviation of the arithmetic mean.

The number of primary particles of the second positive electrode active material in the composite positive electrode active material was determined by counting the number of particles having a particle size of greater than or equal to about 2 µm in the scanning electron microscope image of the cross-section of the composite positive electrode active material, wherein the particle size is defined as a diameter in the case of spherical particles and as a square root of a product of a major axis length and a minor axis length in the case of non-spherical particles. Here, the number of primary particles is an average value of the numbers of primary particles of the second positive electrode active material in a plurality of composite positive electrode active material particles.

Meanwhile, in Comparative Examples 1 to 4, unlike Examples 1-1 to 1-4, the first positive electrode active material and the second positive electrode active material were not spray-dried to produce a dried product, and then fired to produce an assembly form, but were simply mixed to produce the product. Therefore, the first positive electrode active material and the second positive electrode active material were present in a mutually dispersed state, and therefore, evaluation of Table 2 was not performed.

**(Table 2)**

| | Porosity (%) | Average particle diameter of secondary particles (µm) | Average particle diameter of primary particles of first positive electrode | Arithmetic mean size of primary particles of first positive electrode active | Standard deviation of primary particles of first positive electrode active | Average particle diameter of primary particles of second positive | The number of second positive electrode active material of |
|---|---|---|---|---|---|---|---|
| | | | active material (µm) | material (nm) | material (nm) | electrode active material (µm) | primary particles in particle of the composite positive electrode active material |
| Ex. 1-1 | 28 | 15 | 0.5 | 200 | 20.7 | 4 | 3 |
| Ex. 1-2 | 25 | 15 | 0.5 | 200 | 20.7 | 4 | 5 |
| Ex. 1-3 | 20 | 15 | 0.5 | 200 | 20.7 | 4 | 8 |
| Ex. 1-4 | 20 | 15 | 0.5 | 200 | 20.7 | 4 | 10 |
| Ex. 2-1 | 20.2 | 15 | 0.5 | 200 | 18.2 | 4 | 3 |
| Ex. 2-2 | 18.6 | 15 | 0.5 | 200 | 18.2 | 4 | 5 |
| Ex. 2-3 | 15.4 | 15 | 0.5 | 200 | 18.2 | 4 | 8 |
| Ex. 2-4 | 12.6 | 15 | 0.5 | 200 | 18.2 | 4 | 10 |

Referring to Table 2, the composite positive electrode active materials of Examples 1-1 to 1-4, and Examples 2-1 to 2-4 were confirmed that the first positive electrode active material was prepared to have relatively small and uniform primary particles according to its preparation method and also, formed into one assembly form with the primary particles of the second positive electrode active material. Meanwhile, the composite positive electrode active materials prepared in Examples 2-1 to 2-4 differ from the composite positive electrode active materials prepared in Examples 1-1 to 1-4 in that they were further fired. The porosity of the composite positive electrode active materials prepared in Examples 2-1 to 2-4 was further reduced and the standard deviation of the primary particles was further reduced compared to the composite positive electrode active materials prepared in Examples 1-1 to 1-4 that were not further fired. This is understood to be because, as the first dried product, i.e. the composite positive electrode active material prepared in Examples 1-1 to 1-4, was further fired, the bonding between particles within the assembly becomes denser, the pores within the assembly decrease, and as a result, the porosity decreases. In addition, it is understood that during the additional firing process, heat energy acts on the interface between particles, causing relatively small particles to grow or disappear and large particles to have a slow growth rate, resulting in a relaxation of the interparticle size distribution, making the size distribution of primary particles of the first positive electrode active material relatively uniform and reducing the standard deviation.

### Evaluation Example 2: Pellet Density Evaluation

The (composite) positive electrode active materials of Examples 1-1 to 1-4, Examples 2-1 to 2-4, and Comparative Examples 1 to 4 were determined by placing 3 g of each of the (composite) positive electrode active materials in a mold, maintaining each of the (composite) positive electrode active materials in the mold at 4 tons for 30 seconds at a temperature of 25°C, measuring a thickness of the pellet, calculating the pellet volume using the thickness of the pellet and the diameter of the mold, and dividing the mass of the (composite) positive electrode active material by the calculated volume.

### Evaluation Example 3: Evaluation of Battery Performance

### (1) Evaluation of Initial Charge/discharge Capacity and Efficiency

The rechargeable lithium battery cells of Examples 1-1 to 1-4, Examples 2-1 to 2-4, and Comparative Examples 1 to 4 were charged to a battery voltage of 4.3 V at 0.2 C-rate and discharged to a cut-off voltage of 3.0 V at 0.2 C-rate at 25 °C to measure initial charge/discharge capacity, which was used to calculate initial efficiency according to Equation 1. The results are shown in Table 3. Equation 1 is as follows: [Equation 1] 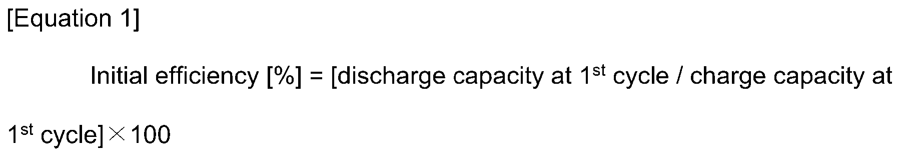 Initial efficiency [%] = [discharge capacity at 1st cycle / charge capacity at 1st cycle] × 100

### (2) Average Voltage

The rechargeable lithium battery cells according to Examples 1-1 to 1-4, Examples 2-1 to 2-4, and Comparative Examples 1 to 4 were measured with respect to an average voltage at SOC (State Of Charge) 50% during the initial discharge, and the results are shown in Table 3.

### (3) Low-temperature Capacity Evaluation

The rechargeable lithium battery cells of Examples 1-1 to 1-4, Examples 2-1 to 2-4, and Comparative Examples 1 to 4 were fully charged to a battery voltage of 4.3 V at 0.2 C-rate and then, discharged to 3.0 V at 0.2 C-rate under an atmosphere set at -20 °C to measure low-temperature discharge capacity. The results are shown in Table 3.

### (4) Cycle-life Characteristics Evaluation

The rechargeable lithium battery cells of Examples 1-1 to 1-4, Examples 2-1 to 2-4, and Comparative Examples 1 to 4 were 50 times repeatedly charged to a battery voltage of 4.3 V at 1 C-rate and then, discharged to a cut-off voltage of 3.0 V at 1 C-rate after the initial charge and discharge to calculate a ratio of 50^{th} cycle discharge capacity to the initial discharge capacity according to Equation 2 herein, and the results are shown in Table 3. Equation 2 is as follows: [Equation 2] 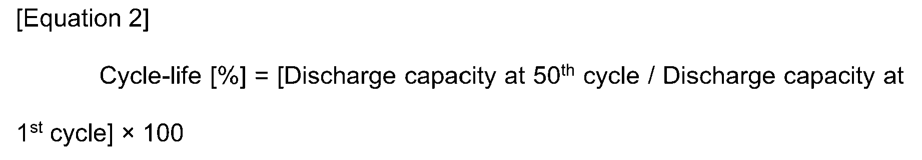 Cycle-life [%] = [Discharge capacity at 50th cycle / Discharge capacity at 1st cycle] × 100

### (5) High-temperature Storage Characteristics Evaluation

The rechargeable lithium battery cells of Examples 1-1 to 1-4, Examples 2-1 to 2-4, and Comparative Examples 1 to 4 were charged to SOC 98% at 0.2 C-rate and then, allowed to stand at 45 °C in a high-temperature chamber for 7 days to measure a capacity retention rate, and the results are shown in Table 3.

### (5) Capacity per Volume Evaluation

The rechargeable lithium battery cells of Examples 1-1 to 1-4, Examples 2-1 to 2-4, and Comparative Examples 1 to 4 were measured with respect to capacity per volume by multiplying the density with the capacity, and the results are shown in Table 3.

**(Table 3)**

| | Pellet density (g/cc) | Average voltage (V) | 0.2C initial charge Capaity (mAh/ g) | 0.2C initial discharge capacity (mAh/ g) | 0.2C efficiency (%) | Low tempe rature (-20 °C) discharge capacity(mA h/g) | 1C cycle-life (%, @50 cy) | High temperature 45 °C capacity retention rate (%) | Capacity per volume (mAh/ cc) |
|---|---|---|---|---|---|---|---|---|---|
| Ex. 1-1 | 2.5 | 3.28 | 159.3 | 151.5 | 95.1 | 57 | 95.1 | 82.9 | 364 |
| Ex. 1-2 | 2.52 | 3.35 | 153.1 | 146.2 | 95.5 | 57 | 94.7 | 91 | 353 |
| Ex. 1-3 | 2.55 | 3.43 | 148 | 142.2 | 96.1 | 56 | 94.2 | 80.3 | 345 |
| Ex. 1-4 | 2.6 | 3.5 | 141.2 | 135.8 | 96.2 | 56 | 93.9 | 79.9 | 336 |
| Ex. 2-1 | 2.51 | 3.28 | 159.7 | 153.5 | 96.1 | 57 | 95.1 | 82.9 | 479 |
| Ex. 2-2 | 2.53 | 3.35 | 154.3 | 148.6 | 96.3 | 57 | 94.7 | 91 | 473 |
| Ex. 2-3 | 2.57 | 3.43 | 149.6 | 144.7 | 96.7 | 56 | 94.2 | 80.3 | 469 |
| Ex. 2-4 | 2.61 | 3.5 | 143.6 | 139.1 | 96.9 | 56 | 93.9 | 79.9 | 460 |
| Comp. Ex. 1 | 2.45 | 3.28 | 159.1 | 151 | 94.9 | 55 | 87.1 | 72.1 | 357 |
| Comp. Ex. 2 | 2.47 | 3.35 | 153.2 | 146.2 | 95.4 | 55 | 86.2 | 71.3 | 346 |
| Comp. Ex. 3 | 2.5 | 3.43 | 147.3 | 141.1 | 95.8 | 54 | 84.1 | 70.1 | 337 |
| Comp. Ex. 4 | 2.55 | 3.5 | 140.9 | 134.9 | 95.7 | 53 | 82.4 | 69.2 | 329 |

Referring to Table 3, the rechargeable lithium battery cells including the positive electrode active materials prepared in Examples 1 to 4 in the form of an assembly, when the mixing weight ratio of the first positive electrode active material and the second positive electrode active material was the same, exhibited superior pellet density, initial discharge capacity, efficiency, low-temperature discharge capacity, 1C cycle-life, high-temperature storage characteristics, and capacity per volume compared to the rechargeable lithium battery cells including the positive electrode active materials prepared in Comparative Examples 1 to 4 in the form of a simple mixture. In the case of the rechargeable lithium battery cells including the positive electrode active materials prepared in Comparative Examples 1 to 4, the first positive electrode active material and the second positive electrode active material were simply mixed, and an isolation phenomenon occurred between each particle due to insufficient electrochemical reaction between the different particles, which may result in a decrease in overall battery performance due to a problem with physical connection between the different particles, and in particular, the high-temperature storage characteristics may be significantly deteriorated. Meanwhile, in the case of the positive electrode active materials prepared in Examples 1 to 4, it is understood that the problem is solved by two types of particles agglomerated with each other to form a single secondary particle form, i.e., an assembly form, and in particular, it can be confirmed that the high-temperature storage characteristics are significantly improved compared to the rechargeable lithium battery cells including the positive electrode active materials prepared in Comparative Examples 1 to 4.

Meanwhile, the rechargeable lithium battery cells including the positive electrode active material prepared in Examples 2-1 to 2-4 exhibited the same average voltage, discharge capacity at low temperature (-20 °C), cycle-life characteristics, and high-temperature storage characteristics as the rechargeable lithium battery cells including the positive electrode active material prepared in Examples 1-1 to 1-4, but the initial charge/discharge capacity and initial efficiency were improved, the powder characteristics were improved, the pellet density was improved, and the capacity per volume was increased compared to the rechargeable lithium battery cells manufactured in Examples 1-1 to 1-4. It was understood that in Examples 2-1 to 2-4, by additionally firing a dried product during the process of forming an assembly including a first positive electrode active material and a second positive electrode active material to obtain a fired product and using this as a positive electrode active material, the bonding between the primary particles of the first positive electrode active material and the primary particles of the second positive electrode active material in the dried product was further strengthened, and the crystal structure was further stabilized, thereby further improving the electrochemical characteristics of the composite positive electrode active material.

While this disclosure has been described in connection with what is presently considered to be practical example embodiments, it is to be understood that the disclosure is not limited to the disclosed embodiments. On the contrary, it is intended to cover various modifications and equivalent arrangements included within the spirit and scope of the appended claims.

## Claims

1. A method for preparing a composite positive electrode active material, comprising:
preparing a first positive electrode active material comprising a lithium iron phosphate-based compound and in a form of primary particles;
mixing and wet milling the first positive electrode active material and a second positive electrode active material comprising a lithium manganese-based composite oxide and in a form of secondary particles in which a plurality of primary particles are agglomerated to prepare a first slurry; and
adding the first slurry to a spray dryer and spray drying the first slurry to prepare a first dried product.

2. The method as claimed in claim 1, wherein
the preparing of the first positive electrode active material comprising a lithium iron phosphate-based compound and in the form of primary particles comprises:
wet milling an iron phosphate-based precursor, a lithium raw material, and a carbon raw material mixed in a second solvent to prepare a second slurry;
adding the wet-milled second slurry to a spray dryer and spray-drying the second slurry to prepare a second dried product;
firing the second dried product to prepare a second fired product; and
pulverizing the second fired product.

3. The method as claimed in claim 2, wherein
the second fired product is in a form of secondary particles in which a plurality of primary particles are agglomerated.

4. The method as claimed in claim 2, wherein
in the pulverizing of the second fired product,
the pulverizing is performed at a pulverization speed of 4000 rpm to 6000 rpm.

5. The method as claimed in any one of claims 1 to 4, wherein
the lithium iron phosphate-based compound comprises a compound represented by Chemical Formula 1, a compound represented by Chemical Formula 2, or a combination thereof:
[Chemical Formula 1] Liₐ₁Fe₍₁₋ₓ₁₎M¹ₓ₁PO₄
wherein, in Chemical Formula 1, 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof,
[Chemical Formula 2] Lia₂Mnₓ₂Fe_{(1-x2-y2)}M²_{y2}PO₄
wherein, in Chemical Formula 2, 0.9≤a2≤1.5, 0.1≤x2≤0.9, 0≤y2<0.9, and M² is Al, Ca, Ce, Cr, Cu, La, Mg, Mo, Nb, Ni, Sn, Sr, Ti, V, W, Y, Zn, Zr, or a combination thereof.

6. The method as claimed in any one of claims 1 to 5, wherein:
the lithium iron phosphate-based compound comprises Al, Mg, Ti, V, or combination thereof, and
the Al, Mg, Ti, V, or the combination thereof is included in an amount of 0.1 mol% to 0.5 mol% based on a total metal excluding lithium.

7. The method as claimed in any one of claims 1 to 6, wherein
an average particle diameter of the primary particles of the first positive electrode active material is greater than or equal to 0.1 µm and less than 2 µm.

8. The method as claimed in any one of claims 1 to 7, wherein
the lithium manganese-based oxide is represented by Chemical Formula 3:
[Chemical Formula 3] Liₐ₃Mnₓ₃M³_{y3}O_{4-b3}X_{b3}
wherein, in Chemical Formula 3, 0.9≤a3≤1.8, 1.7≤x3≤2, 0≤y3≤0.3, 1.9≤x3+y3≤2.1, and 0≤b3≤0.1, M³ is Al, B, Ba, Ca, Ce, Cr, Fe, Mg, Mo, Nb, Si, Sn, Sr, Ti, V, W, Y, Zr, or a combination thereof, and X is F, P, S, or a combination thereof.

9. The method as claimed in any one of claims 1 to 8, wherein
the lithium manganese-based oxide is represented by Chemical Formula 4:
[Chemical Formula 4] Liₐ₄Mnₓ₄Al_{y4}Mg_{z4}M⁴_{w4}O_{4-b4}X_{b4}
wherein, in Chemical Formula 4, 0.9≤a4≤1.8, 1.7≤x4<2.0, 0<y4≤0.015, 0<z4≤0.010, 0≤w4<0.3, 1.9≤x4+y4+z4+w4≤2.1, and 0≤b4≤0.1, M⁴ is B, Ba, Ca, Ce, Cr, Fe, Mo, Nb, Si, Sn, Sr, Ti, V, W, Y, Zr, or a combination thereof, and X is F, P, S, or a combination thereof.

10. The method as claimed in any one of claims 1 to 9, wherein
an average particle diameter of the secondary particles of the second positive electrode active material is 2 µm to 10 µm.

11. The method as claimed in any one of claims 1 to 10, wherein
in the mixing and wet milling of the first positive electrode active material and the second positive electrode active material to prepare the first slurry,
a weight ratio of the first positive electrode active material and the second positive electrode active material is 50:50 to 99:1, and
the secondary particles of the second positive electrode active material are separated into primary particles.

12. The method as claimed in any one of claims 1 to 11, wherein
in the adding of the first slurry to the spray dryer and spray drying the first slurry to prepare the first dried product,
the spray drying is performed at a temperature of 150 °C to 400 °C.

13. The method as claimed in any one of claims 1 to 12, wherein the method for preparing the composite positive electrode active material further comprises:
after the adding the first slurry to the spray dryer and spray drying the first slurry to prepare the first dried product,
firing the first dried product to prepare a first fired product,
wherein, preferably,
the firing is performed under vacuum or inert gas and at a temperature of 300 °C to 1000 °C.

14. A composite positive electrode active material, comprising:
a first positive electrode active material including a lithium iron phosphate-based compound and in a form of primary particles; and
a second positive electrode active material including a lithium manganese-based composite oxide and in a form of primary particles,
wherein the composite positive electrode active material has a particle form including a plurality of primary particles of the first positive electrode active material and a plurality of primary particles of the second positive electrode active material.

15. A rechargeable lithium battery, comprising:
a positive electrode comprising:
a positive electrode current collector, and
a positive electrode active material layer disposed on the positive electrode current collector and comprising a composite positive electrode active material as claimed in claim 14;
a negative electrode; and
an electrolyte.
